# EUROPEAN PATENT SPECIFICATION

(11) **EP 3 128 440 B1**
(45) Date of publication and mention of the grant of the patent: **21.09.2022**
(21) Application number: 14888191.5
(22) Date of filing: 16.12.2014
(51) Int. Cl.: H04L 67/00

(54) **METHOD AND DEVICE FOR INVOKING SERVICE IN MOBILE TERMINAL**
VERFAHREN UND VORRICHTUNG ZUM AUFRUFEN VON DIENSTEN IN EINEM MOBILEN ENDGERÄT
PROCÉDÉ ET DISPOSITIF D'INVOCATION D'UN SERVICE DANS UN TERMINAL MOBILE

(30) Priority: 03.04.2014 CN 201410134292
(43) Date of publication of application: 08.02.2017
(73) Proprietor: Beijing Baidu Netcom Science and Technology Co., Ltd, Beijing 100085 (CN)
(72) Inventor: LI, Huaming, Beijing 100085 (CN); WANG, Daolong, Beijing 100085 (CN); BAI, Kai, Beijing 100085 (CN); CHENG, Chao, Beijing 100085 (CN)
(74) Representative: Gill Jennings & Every LLP
(86) International application number: PCT/CN2014/093955
(87) International publication number: WO 2015/149540

(56) References cited:
- CN-A- 102 075 557
- CN-A- 103 955 482
- Android Developers: "Sending the User to Another App", , 9 April 2012 (2012-04-09), XP002774688, Retrieved from the Internet: URL:https://developer.android.com/training /basics/intents/sending.html [retrieved on 2017-10-13]

## Description

### FIELD OF THE INVENTION

The present invention relates to the technical field of a mobile terminal, and particularly relates to the technology of invoking a service in a mobile terminal.

### BACKGROUND OF THE INVENTION

In recent years, with the development of mobile Internet, mobile terminal applications have become increasingly more abundant, and the services as provided have become more and more comprehensive and complex. When facing a variety of mobile terminal applications, a mobile terminal user often has difficulties finding an appropriate application efficiently. Moreover, tasks desired to be completed by the mobile terminal user always need to be completed by cooperation between different applications. For example, a user desires to take a picture, enhance the picture and then share it with friends. In this case, the user very likely needs to use a camera application, a picture enhancing application, and a picture sharing application. However, because the cooperation between mobile terminal applications has not been very sufficient at present, the user always has to manually switch between various applications. For example, the user may very likely first use the camera application to take a picture, then manually switch to the picture enhancing application to enhance the picture, and finally, manually switch to the picture sharing application to share the picture with friends. Moreover, the user always has to manually transmit various intermediate data (for example, the picture) between the different applications. Such cumbersome manual switch and data transmission between applications impacts user experience.

In addition, presently there still lacks cooperation between the mobile terminal applications, the plentiful services provided by the various mobile terminals can hardly be shared between applications. When an application is running, it is impossible to search for an appropriate application and use its service based on the user need or the usage scenario. Such lack of cooperation causes the repetitive development of the same function in different applications, which increases the development cost of the applications and prolongs the development period.

Therefore, it is a problem to be solved as to how to realize the cooperation between the mobile terminal applications in order to enhance the user experience and to improve the development efficiency.

Android Developers: "Sending the User to Another App", 9 April 2012, XP002774688 discloses features of Android allowing an app to send a user to another app based on an action it would like to perform.

The waybackmachine snapshot of https://www.tripadvisor.co.uk/Restaurants-g188590-Amsterdam_North Holland Prov ince.html of 15 May 2013 discloses a website which shows a user options for filtering the results shown in response to a search for "restaurants in Amsterdam", including based on "cuisine" and "price range".

### SUMMARY OF THE INVENTION

An objective of the present invention is to provide a method and apparatus for invoking a service in a mobile terminal.

According to one aspect of the present invention, there is disclosed a method for invoking a service in a mobile terminal according to claim 1.

According to another aspect of the present invention, there is further provided an apparatus for invoking a service in a mobile terminal according to claim 3.

According to a further aspect of the present invention, there is provided a mobile terminal comprising the above apparatus for invoking a service in the mobile terminal.

Compared with the prior art, the present invention determines the requested service for the running application by querying the service information library, and then invokes the service, thereby enabling the inter-application coordination and enhancing the user experience. At the same time, due to the enablement of the inter-application coordination, when developing an application the same function does not need to be repeatedly developed, thereby enhancing the development efficiency.

### BRIEF DESCRIPTION OF THE PREFERRED EMBODIMENTS

Other features, objectives, and advantages of the present invention will become more apparent by reading the detailed description of the non-limiting embodiments with reference to the accompanying drawings:
Fig. 1 illustrates an exemplary topological diagram of invoking a service in a mobile terminal according to one embodiment of the present invention;
Fig. 2 illustrates a flow diagram of a method for invoking a service in a mobile terminal according to one embodiment in one aspect of the present invention;
Fig. 3 illustrates a flow diagram of a method for determining a requested service in a mobile terminal according to another embodiment in one aspect of the present invention;
Fig. 4 illustrates a flow diagram of a method for determining a requested service in a mobile terminal according to yet another embodiment in one aspect of the present invention;
Fig. 5 illustrates a flow diagram of a method for invoking an application service in a mobile terminal according to one embodiment in one aspect of the present invention; and
Fig. 6 illustrates a schematic diagram of an apparatus for invoking a service in a mobile terminal according to another aspect of the present invention; and a mobile terminal according to a further aspect of the present invention.

In the accompanying drawings, the same or similar reference numerals represent the same or similar components.

### DETAILED DESCRIPTION OF THE EMBODIMENTS

Hereinafter, the present invention will be described in further detail with reference to the present invention.

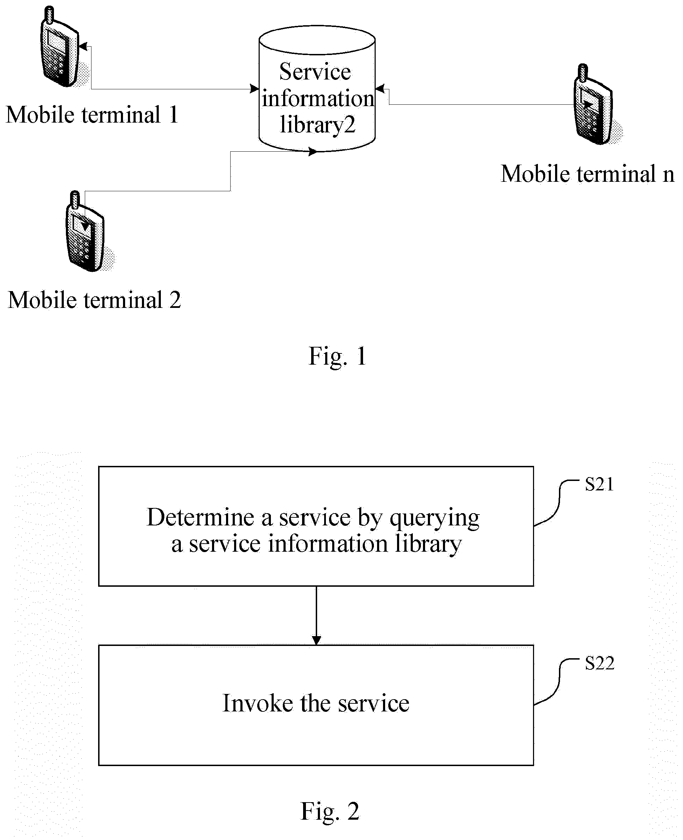

Fig. 1 illustrates an exemplary topological diagram of invoking a service in a mobile terminal according to one embodiment of the present invention. As shown in Fig. 1, mobile terminal 1, mobile terminal 2, ..., mobile terminal n determine a requested service by querying a service information library 2, and then respective mobile terminals may invoke the service.

Herein, a mobile terminal is intended to describe a computer device that can be used during movement, and has a wireless communication capability. The mobile terminal includes, but is not limited to, a cellular phone, a smart phone, a PDA, a laptop, a POS machine, and an in-vehicle computer, etc.

Herein, a service refers to a certain function or task that can be completed by an application when executing certain operations, which has a service interface. The service can be invoked through the service interface. Depending on specific needs and specific implementation modes, one mobile terminal application may provide one or more service. For example, a navigation application A may provide services such as map display service and navigation service etc., while another navigation application B may provide, in addition to the above services, for example, hotspot query service.

An application provider (for example, an application developer, or a seller) may publish its service interface so that other applications can invoke the service provided by the application. In other words, the service interface is an interface that may be used for invoking the service provided by the application. For example, the provider of the above navigation application A may publish the map display service interface and the navigation service interface; while the provider of the navigation application B may publish the navigation service interface and the hotspot query service interface without publishing the map display service interface. In addition, an administrator of the service information library or other third-party institution may also predefine various service interface standards; and the application developer may implement a specific service interface standard, in order to provide the specific service in the application. For example, the administrator of the service information library may predefine a navigation service interface standard, while various navigation application developers, e.g., the developer of navigation application A, the developer of navigation application B, and developers of other navigation applications, may implement the predefined navigation service interface standard in respective applications. In this way, the navigation service in various navigation applications may be invoked through the uniform navigation service interface. As those skilled in the art will appreciate how to determine an interface standard, it will not be described in detail here.

Additionally, the service interfaces may be of diverse kinds, for example, an initiation interface of the application, an API (Application Programming Interface), a middleware such as RPC (Remote Process Call), a URL Scheme in the iOS system, or an inter-process communication interface defined by AIDL (Android Interface Definition Language) in the Android system. A person skilled in the art will appreciate that the service interface type as described here is exemplary, not restrictive. Various other implementations exist without departing from the spirit and scope of the present invention and are incorporated herein by reference.

As mentioned above, the service interface may be implemented using various approaches. Accordingly, different approaches are needed to use the service interface to invoke the services. For example, the service provided by an application may be invoked by initiating and executing and/or switching to the application providing the service. When the service interface is an API function, the API function may be invoked. When the service interface is implemented in the form of the middleware such as an RPC, the middleware mechanism such as the RPC may be used to invoke the service interface. When the service interface is the URL Scheme in the iOS system, a corresponding URL may be used to initiate and/or switch to the service provided by the relevant application. In the Android system, when the service interface is defined using the AIDL mechanism, the service provided by the application may be invoked through the AIDL mechanism. As a person skilled in the art will appreciate the technology of using different interfaces, it will not be repeated in detail here.

Here, the service interfaces of respective applications may be directly used or uniformly encapsulated by the administrator of the service information library or other third-party institutions, for example, being encapsulated using the API function library, thereby using the service interfaces provided by respective applications in a uniform manner. As a person skilled in the art will appreciate the technology of encapsulating the interface, it will not be repeated in detail here. In addition, it may also be possible to use a service interface to invoke a middleware for the service, for example, the service information library per se may be set as such a middleware. Accordingly, the application may use the middleware, for example, the service information library, to indirectly use the service interface to invoke the service provided by other applications. Besides, as a person skilled in the art will appreciate the middleware and how to use the middleware, they will not be repeated in detail here. Further, those skilled in the art will understand, the approaches of using service interfaces as described here are exemplary, not restrictive.

Here, the service information refers to the information regarding the service provided by the applications. In addition to the service interface, the service information also includes, for example, the application name of the service, the type of the service, the name of the service, the provider of the service, the popularity of the service, and the reliability of the service. Herein, some service information, for example, information such as the name of the application providing the service, the name of the service, or the provider of the service may come from the provider of the application which provides the service (e.g., the developer or the seller of the application). Other service information, for example, information such as the service type, may be co-determined by the provider of the application which provides the service and/or the administrator of the service information library and/or other third-party institutions, and one service may have one or more type, e.g., the type of navigation service may be determined as the map type and/or the navigation type. Some other service information may also be provided by the administrator of the service information library and/or the third-party institutions, for example, the popularity of the service, i.e., the popularity degree of the service provided by the application, or the reliability of the service, i.e., the reliability degree of the service provided by the application, which may be obtained through statistical information or user survey. In addition, the service information may also include information such as the time suitable for using the service, the address suitable for using this service; and may also include information such as the application name related to the service, or the application type related to the service. Those skilled in the art will appreciate that the service information described here are exemplary, not restrictive. Moreover, those skilled in the art should also understand that the providers and the approaches providing the service information are exemplary, not restrictive.

Here, the service information library refers to a part of the hardware device and/or the software program and/or the software program for saving the service information and providing access to the service information. The service information library saves various kinds of service information provided by various parties, and is available for the mobile terminal to query. When the service information library is used as the middleware for invoking the service, it may also be used by the mobile terminal to invoke the services provided by other applications. The service information library may be dynamic. The service information may be dynamically added/updated/deleted.

The service information library may also be static. In other words, when the service information library is released, the service information will not be changed till the service information library is published again. Hardware devices used as the service information library include, but are not limited to, a network device, a user equipment, or a device formed by integrating the network device and the user equipment through the network, wherein the network device includes, but is not limited to, a computer, a network host, a single network server, a set consisting of a plurality of network servers or a cloud consisting of a plurality of servers. Here, the cloud is formed by a large number of computers or network servers based on the cloud computing, wherein the cloud computing is a kind of distributive computing, which is a virtual super computer made up by a group of loosely coupled computer sets. The user equipment includes, but is not limited to, any kind of electronic products that may perform human-machine interaction through a keyboard, a remote controller, a touchpad, or an acoustic-control device, for example, a computer, a smart phone, a PDA, a game box, or an IPTV. In addition, the software program and/or a part of software program used as the service information library includes, but is not limited to, a database, an API (Application Programming Interface) function library, etc.

Although the service information library 2 in the embodiment shown in Fig. 1 is centralized and separate from the respective mobile terminals, those skilled in the art will appreciate that other implementations of the service information library exist, for example, the service information library may be centralized or distributive; it may be separate from the respective mobile terminals or integrated in the respective mobile terminals. Those skilled in the art will appreciate that the implementation of the service information library described here and the topological graph of invoking services in the mobile terminal are exemplary, not restrictive.

In addition, when the service information library is separate from the respective mobile terminals, the mobile terminals may communicate with the service information library through network. When the service information library is integrated in the mobile terminal, the mobile terminal may communicate with the service information library directly. When the service information library is a software program (for example, a database), the mobile terminal may use the service information library through an external interface provided by the software program, e.g., a database SQL query interface. When the service information library is a part of the software program, for example, API function library, the mobile terminal may use the service information library through an external interface provided thereby, e.g., an API function.

For the sake of conciseness and brevity, the service information library hereinafter is an API function library, which may be included in various applications in order to be run as a part of the application. The application may query and use the service information library by invoking the API function. Unless otherwise indicated, all of the applications hereinafter include the service information library. Again, those skilled in the art will appreciate that the implementation mode of the service information library and the use mode thereof as described here are exemplary, not restrictive.

Fig. 2 illustrates a flow diagram of a method for invoking a service in a mobile terminal provided by one embodiment in one aspect of the present invention.

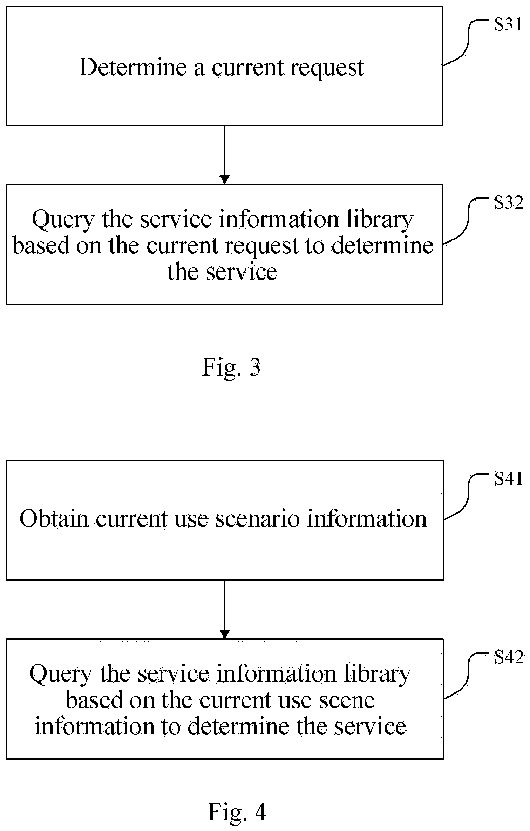

Specifically, at step S21, for a running application, one or more service requested by the application are determined by querying a service information library. For example, a mobile terminal user is running an application named *"Easy Search"* and finds a restaurant named *"Cuisine Home."* The *Easy Search* application queries the service information library with an API function and obtains the service requested by the *Easy Search* application, for example, the service may be a navigation service provided by an application named *"Express Navigation."* Hereinafter, when the embodiments according to the present invention as shown in Figs. 3 and 4 are described, the method for determining one or more service requested by the application by querying the service information library will be further illustrated.

Next, at step S22, the determined one or more service is invoked. For example, for the navigation service provided by the *Express Navigation* application, the *Easy Search* application may invoke the navigation service for example through a service interface of the navigation service as mentioned above to invoke the navigation service, thereby navigating to the *Cuisine Home* restaurant. Because the method for invoking the service using the service interface has been described above in detail, it will not be repeated here.

Fig. 3 illustrates a flow diagram of a method for determining a requested service in a mobile terminal according to another embodiment of the present invention. Specifically, at step S31, one or more current request of an application is determined. Here, the current request refers to the application's current request of the service, which may include at least one of: the type of the requested service, the name of the requested service, the provider of the requested service, the popularity of the requested service, and the reliability of the requested service. In one embodiment, the application may provide a search box as an example to the user in order to be available for the user to input the current request, wherein the user input is considered as the current request. For example, the *Easy Search* application may provide a "Current Service Request" search box on the user interface; the user input information regarding the current request such as "navigation service with a reliability higher than 80%" in the "Current Service Request" search box; then, the *Easy Search* application uses "navigation service with a reliability higher than 80%" as the current request. In another embodiment, the developer of the application may set up some candidate requests. When the application is running, one or more of these candidate requests may be presented to the user, and then the user selects one or more candidate request as the current request. Continuing with the above example, the developer of the *Easy Search* application may set up that when the user searches a restaurant, candidate requests such as navigation service and commentary service may be presented. Moreover, candidate requests such as high popularity and high reliability may also be presented. Then, when the user searches for example *Cuisine Home* restaurant, he chooses from among the above candidate requests according to his own needs, for example, the user may select commentary service with high reliability, such that the *Easy Search* application uses the commentary service with high reliability as the current request. Those skilled in the art will appreciate that the mode of determining the current request as described here is exemplary, not restrictive.

Next, at step S302, a service information library is queried based on the current request to determine one or more service requested by the application. For example, according to the above method, it is determined that the current request of the *Easy Search* application is a navigation service with a reliability higher than 80%. The *Easy Search* application queries the service information library afterwards based on the current request to obtain the navigation service with a reliability higher than 80%, and uses the obtained service as the requested service. When the query results include a plurality of services, for example, the result of the above query includes the navigation service provided by the *Express Navigation* application, and the navigation service provided by the *Fool Navigation* application, they may be ranked according to a certain rule, for example, by their reliabilities, or by their popularity, one or more service ranked at the top is used as the requested service. Alternatively, the application may provide a sorted list of services to the user; the user may select one or more service from the sorted list as the requested service. Those skilled in the art will appreciate the mode of determining one or more requested service from among a plurality of services as described here is exemplary, not restrictive.

Fig. 4 illustrates a flow diagram of a method for determining a requested service in a mobile terminal according to a further embodiment of the present invention. In the present embodiment, the requested service may be determined based on the current use scenario information of the application. At step S41, the current use scenario information of the application is obtained. The current use scenario information of the application here includes any least one of: the application name, the application type, the current time, the current address and the like. For example, when the user performs a search using the *Easy Search* application, the current use scenario information of the *Easy Search* application may include at least any one of: the application name *Easy Search,* information search as the application type, the current time, and the current address. The current use scenario information of the application may be obtained from the application per se, or from interaction with the operating system of the mobile terminal, and the like. As those skilled in the art will appreciate how to obtain the current use scenario information of the application, it will not be repeated in detail here. Those skilled in the art will appreciate that the current use scenario information described here is only exemplary, not restrictive.

Next, at step S42, the service information library is queried based on the current user scenario information of the application to determine one or more service requested by the application. Specifically, in one embodiment, the service information library may be queried based on the information included in the current use scenario information. For example, for the application with the application name e.g. *Easy Search* in the current use scenario information, services related to the application name, e.g., *Easy Search,* may be queried in the service information library. For the application with the application type, for example, information search in the current use scenario information, services related to the application type, for example, information search type, may be queried in the service information library. Herein, the application provider and/or the administrator of the service information library and/or the third-party institution may determine the services related to a given application name or a given application type by, for example, providing statistics on which other services are generally used by the user using the given application or the given application type. For example, based on the statistical information, the services related to the photograph shooting application may include picture enhancing, picture sharing and the like. The services related to the application of document reading type may include document translation, document sharing and the like. In one embodiment, for the current time or current address information in the current user scenario information, the services suitable for the time or address may be queried in the service information library. For example, if the current time is a dinner time, then an appropriate service may be food order service, if the current address is a scenic landmark, the appropriate service may be room order service, wherein the administrator of the service information library and/or the third-party institution may determine the service suitable for a given time or address by counting the user's use habits and the like. In addition, in one embodiment, the requested service may be determined based on the combination of various information in the current use scenario information. For example, if the application being running is a *Free Travel* application, which has the application type of travel, the current address of Shanghai and the current time of spring, services appropriate to a user travelling in Shanghai in spring may be queried in the service information library. The results may include Shanghai spring tourism service, Shanghai weather report service, etc. Those skilled in the art will appreciate the mode of determining the requested service according to the current use scenario information as described here is exemplary, not restrictive.

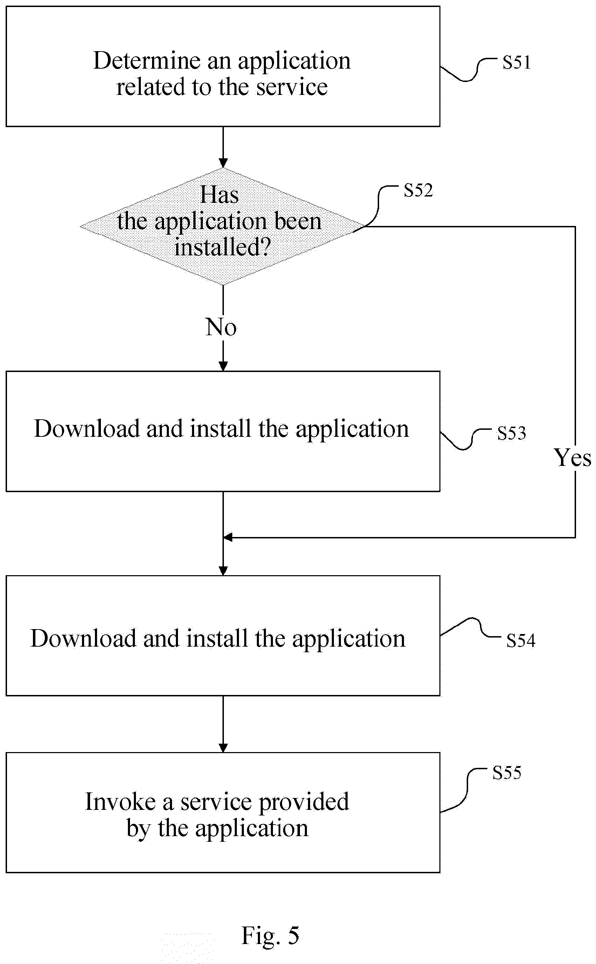

Fig. 5 illustrates a flow diagram of a method for invoking an application service in a mobile terminal according to one embodiment of the present invention.

Specifically, at step S51, the applications related to one or more service to be invoked is determined. According to the above method, one or more requested service may be obtained by querying the service information library. As mentioned above, the obtained query result may be, for example, the navigation service provided by the *Express Navigation* application, which includes information of the application providing the service. In this example, it is the *Express Navigation* application.

Alternatively, the obtained query may be, for example, a food order service, which does not include the information of the application providing the service. In the former case, based on the information of the application providing the service as contained in the query result, the application providing the service may be directly determined, and then the service provided by the application may be invoked according to the above mentioned method, which will not be described in detail here. However, in the latter case, the application that may provide the service needs to be first determined, and then the service provided by the application is invoked. In one embodiment, all applications providing the service may be obtained by querying the service information library, and then these applications are sorted according to a certain rule, for example, based on the provider of the service, the reliability of the service, and the popularity of the service, etc. For example, for the food order service, the obtained applications may be sorted based on the providers of the services, e.g., the application provided by a food order provider which is relatively larger or which is currently providing a special offer may be top-ranked. For example, for the picture enhancing service, the obtained applications may be sorted based on the reliability ranks of the services, wherein the application having a higher reliability for the picture enhancing service as provided will be top-ranked. In addition, a comprehensive ranking, for example, the weighted sorting, may be performed based on the provider of the service, the popularity of the service, and the reliability of the service, and the like. Then, the application ranked at the top is used as the application related to the requested service. A ranking list of the applications obtained from the query may also be presented to the user; the user may select one of them as the application related to the requested service. Those skilled in the art will appreciate that the mode of determining the application related to the requested service as described here is exemplary, not restrictive.

Next, at step S52, it is judged whether the application has been installed on the mobile terminal. If the application has not been installed on the mobile terminal, at step S53, the application will be downloaded and installed. For example, when the user use the document reading application to read an English document, it may be derived from the method mentioned above that the requested service provided by the application may include, for example, an English translation service, and by querying the service information library, one or more application providing the English translation service may be derived and sorted according to the above method, and a list of sorted applications is presented to the user. In the list, the user selects the English translation service provided by the *Baidu Translation* application. Next, at step S53, it is judged that the *Baidu Translation* application has not been installed yet. After being confirmed by the user, the *Baidu Translation* application will then be downloaded and automatically installed. As those skilled in the art will appreciate the technology of downloading and installing an application, it will not be repeated in detail here.

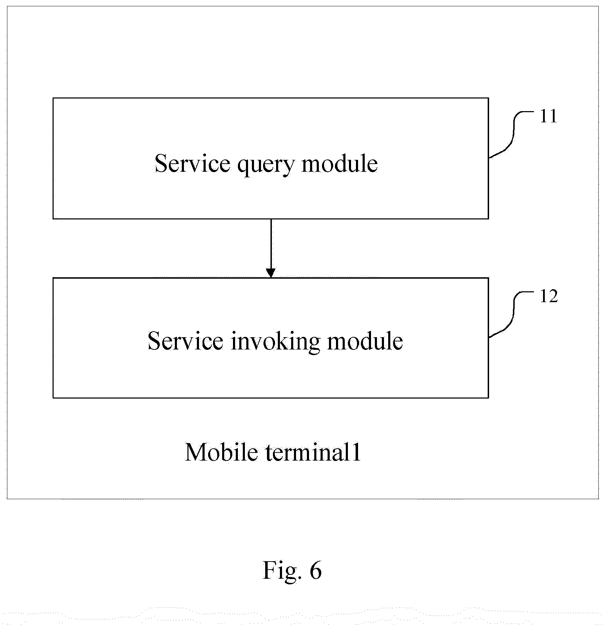

Next, at step S54, the service provided by the application will be invoked. Continuing with the above example, the document reading application will invoke the English translation service provided by the *Baidu Translation* application in order to translate the English document being read into Chinese. Here, the specific manner of invoking a service has been described above in detail, which will not be repeated in detail here. Fig. 6 illustrates a schematic diagram of an apparatus for invoking a service in a mobile terminal provided by another aspect of the present invention. As illustrated in Fig. 6, the apparatus for invoking a service in a mobile terminal 1 comprises a module for determining one or more service requested by a running application by querying a service information library, i.e., a service query module 11 as shown in Fig. 6; and module for invoking the one or more service to provide the one or more service to the application, i.e., a service invoking module 12 as shown in Fig. 6.

Specifically, the service query module 11 determines, for the running application, one or more service requested by the application by querying the service information library. For example, a mobile terminal user is running an application named *"Easy Search"* and finds a restaurant named *"Cuisine Home".* The *Easy Search* application queries the service information library with an API function and obtains the service requested by the *Easy Search* application, for example, the service may be a navigation service provided by an application named *"Express Navigation".* Hereinafter, the method of determining one or more service requested by the application by querying the service information library will be further illustrated.

Next, the service invoking module 12 will invoke the determined one or more service. For example, for the navigation service provided by the *Express Navigation* application, the *Easy Search* application may invoke the navigation service, for example, through a service interface of the navigation service as mentioned above to invoke the navigation service, thereby navigating to the *Cuisine Home* restaurant. As the method of invoking a service using a service interface has been described above in detail, it will not be repeated in detail here.

Specifically, the service query module 11 determines one or more current request of an application. Here, the current request refers to the application's current request of the service, which may include at least any one of: a type of the requested service, a name of the requested service, a provider of the requested service, a popularity of the requested service, and a reliability of the requested service. In one embodiment, the application may provide a search box as an example to the user in order to be available for the user to input the current request, wherein the user input is considered as the current request. For example, the *Easy Search* application may provide a "Current Request of Service" search box on the user interface; the user input information regarding the current request such as "navigation service with a reliability higher than 80%" in the "Current Request of Service" search box. The *Easy Search* application then uses "navigation service with a reliability higher than 80%" as the current request. In another embodiment, the developer of the application may set up some candidate requests. When the application is running, one or more of these candidate requests may be presented to the user, and then the user selects one or more candidate request as the current request. Continuing with the above example, the developer of the *Easy Search* application may set up the application such that, when the user searches a restaurant, candidate requests such as navigation service and commentary service may be presented, and candidate requests such as high popularity and high reliability may also be presented. When the user searches afterwards, for example, the *Cuisine Home* restaurant, he chooses from among the above candidate requests according to his own needs, for example, the user may select commentary service with high reliability, such that the *Easy Search* application uses the commentary service with high reliability as the current request. Those skilled in the art will appreciate that the mode of determining the current request as described here is exemplary, not restrictive.

Next, the service query module 11 queries the service information library based on the current request to determine one or more service requested by the application. For example, according to the above method, it is determined that the current request of the *Easy Search* application is a navigation service with a reliability higher than 80%. The *Easy Search* application queries the service information library afterwards based on the current request to obtain the navigation service with a reliability higher than 80%, and uses the found service as the requested service. When the query results include a plurality of services, for example, the above query results includes the navigation service by the *Express Navigation* application, and the navigation service by the *Fool Navigation* application, they may be ranked according to a certain rule, for example, by their reliabilities, or by their popularity; one or more top-ranked service is used as the requested service. Alternatively, the application may provide a sorted list of services to the user, and the user may select one or more service from the sorted list as the requested service. Those skilled in the art will appreciate the mode of determining one or more requested service from among a plurality of services as described here is exemplary, not restrictive.

In a further embodiment provided by the present invention, the service query module 11 may determine the requested service based on the current use scenario information of the application. The service query module 11 will obtain the current use scenario information of the application. The current use scenario information of the application here includes any least one of: the application name, the application type, the current time, the current address and the like. For example, when the user performs a search using the *Easy Search* application, the current use scenario information of the *Easy Search* application may include at least any one of: the application name *Easy Search,* information search as the application type, the current time, and the current address. The current use scenario information of the application may be obtained from the application per se or from interaction with the operating system of the mobile terminal, and the like. As those skilled in the art will appreciate how to obtain the current use scenario information of the application, it will not be repeated in detail here. Those skilled in the art will appreciate that the current use scenario information described here is only exemplary, not restrictive.

Next, the service query module 11 queries the service information library based on the current user scenario information of the application to determine one or more service requested by the application. Specifically, in one embodiment, the service information library may be queried based on the information included in the current use scenario information. For example, for the application with the application name, e.g., *Easy Search* in the current use scenario information, services related to the application name, e.g., *Easy Search,* may be queried in the service information library. For the application with the application type for example information search in the current use scenario information, services related to the application type, for example, the information search type, may be queried in the service information library. Herein, the application provider and/or the administrator of the service information library and/or the third-party institution may determine the service related to a given application name or a given application type by, for example, providing statistics on which other services are generally used by the user using the given application or the given application type. For example, based on the statistical information, the service related to the photograph shooting application may include picture enhancing and picture sharing and the like. The services related to the application of the document reading type may include document translation, document sharing and the like. In one embodiment, for the current time or current address information in the current user scenario information, the services suitable for the time or address may be queried in the service information library. For example, if the current time is the dinner time, then an appropriate service may be a food order service; if the current address is a scenic landmark, the appropriate service may be a room order service, wherein an administrator of the service information library and/or the third-party institution may determine the service suitable for a given time or address by counting the user's use habits and the like. In addition, in one embodiment, the requested service may be determined based on the combination of various information in the current use scenario information. For example, the application being running is a *Free Travel* application, which has the travel type, the current address of Shanghai, and the current time of spring. The services appropriate to a user travelling in Shanghai in spring may then be queried in the service information library. The results may include, Shanghai spring tourism service, Shanghai weather report service, etc. Those skilled in the art will appreciate the mode of determining the requested service according to the current use scenario information as described here is exemplary, not restrictive.

Next, the service query module 11 determines the application related to one or more service to be invoked. According to the above method, one or more requested service may be obtained by querying the service information library. As mentioned above, the obtained query result may be for example the navigation service provided by the *Express Navigation* application, which includes information of the application providing the service. In this example, it is the *Express Navigation* application. Alternatively, the obtained query may be, for example, a food order service, which does not include the information of the application providing the service. In the former case, based on the information of the application providing the service as contained in the query result, the application providing the service may be directly determined, and then the service provided by the application may be invoked according to the above mentioned method, which will not be described in detail here. However, in the latter case, the application that may provide the service needs to be first determined, and then the service provided by the application is invoked. In one embodiment, all applications providing the service may be obtained by querying the service information library, and then these applications are sorted according to a certain rule, for example, based on the provider of the service, the reliability of the service, and the popularity of the service, etc. For example, for the food order service, the obtained applications may be sorted based on the providers of the services, e.g., the application provided by a food order provider which is relatively larger or which is currently providing a special offer may be top-ranked. For example, for the picture enhancing service, the queried applications may be sorted based on the reliability ranks of the services, wherein the application having a higher reliability for the picture enhancing service as provided will be top-ranked. In addition, a comprehensive ranking, for example, the weighted sorting, may be performed based on the provider of the service, the popularity of the service, and the reliability of the service, and the like. Then, the application ranked at the top is used as the application related to the requested service. A ranking list of the applications obtained from query may also be presented to the user; the user may select one of them as the application related to the requested service. Those skilled in the art will appreciate that the mode of determining an application related to the requested service as described here is exemplary, not restrictive.

Next, the service invoking module 12 will judge whether the application has been installed on the mobile terminal. If not, the service invoking module 12 will download and install the application. For example, when the user use a document reading application to read an English document, it may be derived from the method mentioned above that the requested service provided by the application may include, for example, an English translation service, and by querying the service information library, one or more application providing the English translation service may be derived and sorted according to the above method, and a list of sorted applications is presented to the user. In the list, the user selects the English translation service provided by the *Baidu Translation* application. Next, the service invoking module 12 judges that the *Baidu Translation* application has not been installed yet. After being confirmed by the user, the *Baidu Translation* application will then be downloaded and automatically installed. Because those skilled in the art will appreciate the technology of downloading and installing an application, it will not be repeated in detail here. Next, the service invoking module 12 will invoke the service provided by the application. Continuing with the above example, the document reading application will invoke the English translation service provided by the *Baidu Translation* application in order to translate the English document into Chinese. Here, the specific mode of invoking a service has been described above in detail, which will not be repeated in detail here.

Fig. 6 also shows a mobile terminal according to a further aspect of the present invention, comprising an apparatus for invoking a service in the mobile terminal.

It should be noted that the present invention may be implemented in software and/or a combination of software and hardware. For example, each module of the present invention may be implemented by an application-specific integrated circuit (ASIC) or any other similar hardware device. In one embodiment, the software program of the present invention may be executed by a processor to implement the steps or functions as mentioned above. Likewise, the software program (including relevant data structure) of the present invention may be stored in a computer readable recording medium, for example, a RAM memory, a magnetic or optic driver or a soft floppy or similar devices. Additionally, some steps or functions of the present invention may be implemented by hardware, for example, a circuit cooperating with the processor to implement various steps or functions.

Additionally, a part of the present invention may be applied as a computer program product, for example, computer program instructions, which, when being executed by the computer, may invoke or provide the method and/or the technical solution according to the present invention. Further, the program instructions for invoking the method of the present invention may be stored in a fixed or removable recording medium, and/or transmitted through broadcast or data stream in other signal carrying media, and/or stored in a work memory of a computer device running based on the program instructions. Here, one embodiment according to the present invention comprises an apparatus that includes a memory storing the computer program instructions and a processor executing the program instructions, wherein when being executed by the processor, the computer program instructions trigger the apparatus to operate the method and/or the technical solution according to multiple embodiments of the present invention as mentioned above. The embodiments should be regarded as exemplary, not restrictive; the scope of the present invention is limited by the appended claims, instead of the above depiction. Reference signs in the claims should not be regarded as limiting the involved claims. Besides, it is apparent that the term "comprise" does not exclude other units or steps, and singularity does not exclude plurality. A plurality of units or modules stated in a system claim may also be implemented by a single unit or module through software or hardware. Terms such as the first and the second are used for naming, but do not indicate any particular sequence.

## Claims

1. A method for invoking a service in a mobile terminal, the method comprising:
- determining for a running application one or more services requested by the application by querying a service information library; and
- invoking, by the running application, the one or more services through respective service interfaces of the one or more services to provide the one or more services in the running application;
wherein the determining for the running application the one or more services requested by the application by querying the service information library comprises:
- determining one or more current requests of the application; and
- querying the service information library based on the one or more current requests to determine one or more services requested by the application;
wherein the step of determining the one or more current request of the application comprises:
- presenting one or more candidate requests to a user; and
- determining the one or more current requests of the application based on the user's selection from the one or more candidate requests;
wherein the one or more current requests comprise at least one of:
- a type of a requested service;
- a name of the requested service;
- a provider of the requested service;
- a popularity of the requested service; and
- a reliability of the requested service;
wherein the invoking the one or more services to provide the one or more services to the application comprises:
- determining a relevant application providing the one or more services;
- downloading and installing the relevant application if the relevant application has not been installed;
- invoking the one or more services corresponding to the relevant application to provide the one or more services to the application.

2. The method according to claim 1, wherein the step of determining for the running application the one or more services requested by the application by querying the service information library comprises:
- obtaining scenario information currently available to the application; and
- querying the service information library based on the scenario information to determine the one or more services requested by the application.

3. An apparatus for invoking a service in a mobile terminal, the apparatus comprising:
- means for determining for a running application one or more services requested by the application by querying a service information library; and
- means for invoking, by the running application, the one or more services through respective service interfaces of the one or more services to provide the one or more services in the running application;
wherein the means for determining for the running application the one or more services requested by the application by querying the service information library comprises:
- means for determining one or more current requests of the application; and
- means for querying the service information library based on the one or more current requests to determine one or more service requested by the application;
wherein the means for determining the one or more current requests of the application comprises:
- means for presenting one or more candidate requests to a user; and
- means for determining the one or more current requests of the application based on the user's selection from the one or more candidate requests;
wherein the one or more current requests comprise at least one of:
- a type of a requested service;
- a name of the requested service;
- a provider of the requested service;
- a popularity of the requested service; and
- a reliability of the requested service;
wherein the module configured to invoke the one or more service so as to be provided to the application comprises:
- means for determining a relevant application providing the one or more services;
- means for downloading and installing the relevant application if the relevant application has not been installed; and
- means for invoking the one or more services corresponding to the relevant application to provide the one or more services to the application.

4. The apparatus according to claim 3, wherein the means for determining for the running application the one or more services requested by the application by querying the service information library comprises:
- a module configured to obtain scenario information currently available to the application;
- a module configured to query a service information library based on the scenario information to determine one or more services requested by the application.

5. A mobile terminal, comprising the apparatus according to any one of claims 3-4.

6. A computer readable recording medium that comprises computer codes, wherein when the computer codes are executed, the method according to any one of claims 1-2 is executed.

7. A computer program product, wherein when the computer program product is executed by a computer device, the method according to any one of claims 1-2 is executed.

8. A computer device, comprising a memory and a processor, wherein computer codes are stored in the memory, and the processor is configured to execute the computer codes to execute the method according to any one of claims 1-2.

## Patentansprüche

1. Verfahren zum Aufrufen eines Dienstes in einer mobilen Endvorrichtung, wobei das Verfahren Folgendes umfasst:
- Bestimmen eines oder mehrerer von der Anwendung angeforderter Dienste für eine laufende Anwendung durch Abfragen einer Dienstinformationsbibliothek; und
- Aufrufen des einen oder der mehreren Dienste durch die laufende Anwendung über entsprechende Dienstschnittstellen des einen oder der mehreren Dienste, um den einen oder die mehreren Dienste in der laufenden Anwendung bereitzustellen;
wobei das Bestimmen des einen oder der mehreren von der Anwendung angeforderten Dienste für die laufende Anwendung durch Abfragen der Dienstinformationsbibliothek Folgendes umfasst:
- Bestimmen einer oder mehrerer aktueller Anforderungen der Anwendung; und
- Abfragen der Dienstinformationsbibliothek basierend auf der einen oder mehreren aktuellen Anforderungen, um einen oder mehrere von der Anwendung angeforderte Dienste zu bestimmen;
wobei der Schritt des Bestimmens der einen oder mehreren aktuellen Anforderung(en) der Anwendung Folgendes umfasst:
- Präsentieren einer oder mehrerer Kandidatenanforderungen für einen Benutzer; und
- Bestimmen der einen oder mehreren aktuellen Anforderungen der Anwendung basierend auf der Auswahl des Benutzers aus den einen oder mehreren Kandidatenanforderungen;
wobei die eine oder die mehreren aktuellen Anforderungen mindestens eines der Folgenden umfassen:
- einen Typ eines angeforderten Dienstes;
- einen Namen des angeforderten Dienstes
- einen Anbieter des angeforderten Dienstes
- eine Beliebtheit des angeforderten Dienstes; und
- eine Zuverlässigkeit des angeforderten Dienstes;
wobei das Aufrufen des einen oder der mehreren Dienste, um den einen oder die mehreren Dienste für die Anwendung bereitzustellen, Folgendes umfasst:
- Bestimmen einer relevanten Anwendung, die den einen oder die mehreren Dienste bereitstellt;
- Herunterladen und Installieren der relevanten Anwendung, falls die relevante Anwendung noch nicht installiert wurde;
- Aufrufen des einen oder der mehreren Dienste, die der relevanten Anwendung entsprechen, um den einen oder die mehreren Dienste für die Anwendung bereitzustellen.

2. Verfahren nach Anspruch 1, wobei der Schritt des Bestimmens des einen oder der mehreren von der Anwendung angeforderten Dienste für die laufende Anwendung durch Abfragen der Dienstinformationsbibliothek Folgendes umfasst:
- Erhalten von Szenario-Informationen, die derzeit für die Anwendung verfügbar sind; und
- Abfragen der Dienstinformationsbibliothek basierend auf den Szenario-Informationen, um den einen oder die mehreren von der Anwendung angeforderten Dienste zu bestimmen.

3. Vorrichtung zum Aufrufen eines Dienstes in einer mobilen Endvorrichtung, wobei die Vorrichtung Folgendes umfasst:
- ein Mittel zum Bestimmen eines oder mehrerer von der Anwendung angeforderter Dienste für eine laufende Anwendung durch Abfragen einer Dienstinformationsbibliothek; und
- ein Mittel zum Aufrufen des einen oder der mehreren Dienste durch die laufende Anwendung über entsprechende Dienstschnittstellen des einen oder der mehreren Dienste, um den einen oder die mehreren Dienste in der laufenden Anwendung bereitzustellen;
wobei das Mittel zum Bestimmen des einen oder der mehreren von der Anwendung angeforderten Dienste für die laufende Anwendung durch Abfragen der Dienstinformationsbibliothek Folgendes umfasst:
- ein Mittel zum Bestimmen einer oder mehrerer aktueller Anforderungen der Anwendung; und
- ein Mittel zum Abfragen der Dienstinformationsbibliothek basierend auf der einen oder mehreren aktuellen Anforderungen, um einen oder mehrere von der Anwendung angeforderte Dienste zu bestimmen;
wobei das Mittel zum Bestimmen der einen oder mehreren aktuellen Anforderung(en) der Anwendung Folgendes umfasst:
- ein Mittel zum Präsentieren einer oder mehrerer Kandidatenanforderungen für einen Benutzer; und
- ein Mittel zum Bestimmen der einen oder mehreren aktuellen Anforderungen der Anwendung basierend auf der Auswahl des Benutzers aus den einen oder mehreren Kandidatenanforderungen;
wobei die eine oder die mehreren aktuellen Anforderungen mindestens eines der Folgenden umfassen:
- einen Typ eines angeforderten Dienstes;
- einen Namen des angeforderten Dienstes
- einen Anbieter des angeforderten Dienstes
- eine Beliebtheit des angeforderten Dienstes; und
- eine Zuverlässigkeit des angeforderten Dienstes;
wobei das Modul, das dafür konfiguriert ist, den einen oder die mehreren Dienste aufzurufen, um sie der Anwendung zur Verfügung zu stellen, Folgendes umfasst:
- ein Mittel zum Bestimmen einer relevanten Anwendung, die den einen oder die mehreren Dienste bereitstellt;
- ein Mittel zum Herunterladen und Installieren der relevanten Anwendung, falls die relevante Anwendung noch nicht installiert wurde; und
- ein Mittel zum Aufrufen des einen oder der mehreren Dienste, die der relevanten Anwendung entsprechen, um den einen oder die mehreren Dienste für die Anwendung bereitzustellen.

4. Vorrichtung nach Anspruch 3, wobei das Mittel zum Bestimmen des einen oder der mehreren von der Anwendung angeforderten Dienste für die laufende Anwendung durch Abfragen der Dienstinformationsbibliothek Folgendes umfasst:
- ein Modul, das dafür konfiguriert ist, Szenario-Informationen zu erhalten, die derzeit für die Anwendung verfügbar sind;
- ein Modul, das dafür konfiguriert ist, eine Dienstinformationsbibliothek basierend auf den Szenario-Informationen abzufragen, um einen oder mehrere von der Anwendung angeforderte Dienste zu bestimmen.

5. Mobile Endvorrichtung, die die Vorrichtung nach einem der Ansprüche 3 bis 4 umfasst.

6. Computerlesbares Aufzeichnungsmedium, das Computercodes umfasst, wobei, wenn die Computercodes ausgeführt werden, das Verfahren nach einem der Ansprüche 1 bis 2 ausgeführt wird.

7. Computerprogrammprodukt, wobei, wenn das Computerprogrammprodukt von einer Computervorrichtung ausgeführt wird, das Verfahren nach einem der Ansprüche 1 bis 2 ausgeführt wird.

8. Computervorrichtung, die einen Speicher und einen Prozessor umfasst, wobei Computercodes in dem Speicher gespeichert sind und der Prozessor dafür konfiguriert ist, die Computercodes auszuführen, um das Verfahren nach einem der Ansprüche 1 bis 2 auszuführen.

## Revendications

1. Procédé d'invocation d'un service dans un terminal mobile, le procédé comportant les étapes consistant à :
- déterminer pour une application en cours d'exploitation un ou plusieurs services demandés par l'application en interrogeant une bibliothèque d'informations de services ; et
- invoquer, par l'application en cours d'exploitation, lesdits un ou plusieurs services par le biais d'interfaces de services respectives desdits un ou plusieurs services pour fournir lesdits un ou plusieurs services dans l'application en cours d'exploitation ;
dans lequel l'étape consistant à déterminer pour l'application en cours d'exploitation lesdits un ou plusieurs services demandés par l'application en interrogeant la bibliothèque d'informations de services comporte les étapes consistant à :
- déterminer une ou plusieurs demandes en cours de l'application ; et
- interroger la bibliothèque d'informations de services en se basant sur lesdites une ou plusieurs demandes en cours pour déterminer lesdits un ou plusieurs services demandés par l'application ;
dans lequel l'étape consistant à déterminer lesdites une ou plusieurs demandes en cours de l'application comporte les étapes consistant à :
- présenter une ou plusieurs demandes candidates à un utilisateur ; et
- déterminer lesdites une ou plusieurs demandes en cours de l'application en se basant sur la sélection de l'utilisateur en provenance desdites une ou plusieurs demandes candidates ;
dans lequel lesdites une ou plusieurs demandes en cours comportent au moins l'un parmi :
- un type d'un service demandé ;
- un nom du service demandé ;
- un fournisseur du service demandé ;
- une popularité du service demandé ; et
- une fiabilité du service demandé ;
dans lequel l'étape consistant à invoquer un ou plusieurs services pour fournir lesdits un ou plusieurs services à l'application comporte les étapes consistant à :
- déterminer une application pertinente fournissant lesdits un ou plusieurs services ;
- télécharger et installer l'application pertinente si l'application pertinente n'a pas été installée ;
- invoquer lesdits un ou plusieurs services qui correspondent à l'application pertinente pour fournir lesdits un ou plusieurs services à l'application.

2. Procédé selon la revendication 1, dans lequel l'étape consistant à déterminer pour l'application en cours d'exploitation lesdits un ou plusieurs services demandés par l'application en interrogeant la bibliothèque d'informations de services comporte les étapes consistant à :
- obtenir des informations de scénario actuellement disponibles pour l'application ; et
- interroger la bibliothèque d'informations de services en se basant sur les informations de scénario pour déterminer lesdits un ou plusieurs services demandés par l'application.

3. Appareil d'invocation d'un service dans un terminal mobile, l'appareil comportant :
- un moyen servant à déterminer pour une application en cours d'exploitation un ou plusieurs services demandés par l'application en interrogeant une bibliothèque d'informations de services ; et
- un moyen servant à invoquer, par l'application en cours d'exploitation, lesdits un ou plusieurs services par le biais d'interfaces de services respectives desdits un ou plusieurs services pour fournir lesdits un ou plusieurs services dans l'application en cours d'exploitation ;
dans lequel le moyen servant à déterminer pour l'application en cours d'exploitation lesdits un ou plusieurs services demandés par l'application en interrogeant la bibliothèque d'informations de services comporte :
- un moyen servant à déterminer une ou plusieurs demandes en cours de l'application ; et
- un moyen servant à interroger la bibliothèque d'informations de services en se basant sur lesdites une ou plusieurs demandes en cours pour déterminer lesdits un ou plusieurs services demandés par l'application ;
dans lequel le moyen servant à déterminer lesdites une ou plusieurs demandes en cours de l'application comporte :
- un moyen servant à présenter une ou plusieurs demandes candidates à un utilisateur ; et
- un moyen servant à déterminer lesdites une ou plusieurs demandes en cours de l'application en se basant sur la sélection de l'utilisateur en provenance desdites une ou plusieurs demandes candidates ;
dans lequel lesdites une ou plusieurs demandes en cours comportent au moins l'un parmi :
- un type d'un service demandé ;
- un nom du service demandé ;
- un fournisseur du service demandé ;
- une popularité du service demandé ; et
- une fiabilité du service demandé ;
dans lequel le module configuré pour invoquer lesdits un ou plusieurs services de manière à les fournir à l'application comporte :
- un moyen servant à déterminer une application pertinente fournissant lesdits un ou plusieurs services ;
- un moyen servant à télécharger et à installer l'application pertinente si l'application pertinente n'a pas été installée ; et
- un moyen servant à invoquer lesdits un ou plusieurs services qui correspondent à l'application pertinente pour fournir lesdits un ou plusieurs services à l'application.

4. Appareil selon la revendication 3, dans lequel le moyen servant à déterminer pour l'application en cours d'exploitation lesdits un ou plusieurs services demandés par l'application en interrogeant la bibliothèque d'informations de services comporte :
- un module configuré pour obtenir des informations de scénario actuellement disponibles pour l'application ;
- un module configuré pour interroger une bibliothèque d'informations de services en se basant sur les informations de scénario pour déterminer un ou plusieurs services demandés par l'application.

5. Terminal mobile, comportant l'appareil selon l'une quelconque des revendications 3 à 4.

6. Support d'enregistrement lisible par ordinateur qui comporte des codes informatiques, dans lequel, quand les codes informatiques sont exécutés, le procédé selon l'une quelconque des revendications 1 à 2 est exécuté.

7. Produit programme informatique, dans lequel, quand le produit programme informatique est exécuté par un dispositif informatique, le procédé selon l'une quelconque des revendications 1 à 2 est exécuté.

8. Dispositif informatique, comportant une mémoire et un processeur, dans lequel des codes informatiques sont stockés dans la mémoire, et le processeur est configuré pour exécuter les codes informatiques pour exécuter le procédé selon l'une quelconque des revendications 1 à 2.
